(19) Europäisches Patentamt / European Patent Office / Office européen des brevets

(11) **EP 2 107 321 A1**

(12) **DEMANDE DE BREVET EUROPEEN**

(43) Date de publication:
**07.10.2009 Bulletin 2009/41**

(51) Int Cl.:
**F25B 9/04** (2006.01)

(21) Numéro de dépôt: **09156167.0**

(22) Date de dépôt: **25.03.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **01.04.2008 FR 0852124**

(71) Demandeur: **S.I.R.S.E.**
**76520 Les Authieux Port Saint-Ouen (FR)**

(72) Inventeur: **Serre, Jean-Pascal**
**76520, Les Authieux/Port Saint-Ouen (FR)**

(74) Mandataire: **Kohn, Philippe**
**PISTIL**
**33 avenue de la Mare aux Daims**
**76800 Saint Etienne du Rouvray (FR)**

(54) **Procédé de commande d'un dispositif comportant des tubes vortex de Hilsch-Ranque**

(57) L'invention concerne un procédé de commande d'un dispositif de climatisation (80) ou de refroidissement frigorifique (10) ou de chauffage de l'intérieur d'une enceinte (12) fermée, le dispositif (10, 80) comportant au moins une source d'air comprimé (16, 30) qui alimente au moins un tube de Hilsch-Ranque (24) dit tube "vortex" en air comprimé à une pression d'injection (Pinj),

**caractérisé en ce qu**'une soupape conique (48) du tube (24) est préréglée de manière que les première (FC) et deuxième (FF) fractions d'air froid et chaud soient constantes durant le déroulement du procédé et en ce qu'il comporte une étape (E3, C4) de commande de la pression d'injection de l'air comprimé (Pinj).

L'invention concerne aussi un dispositif pour la mise en oeuvre d'un tel procédé.

Fig. 1

EP 2 107 321 A1

**Description**

L'invention se rapporte à un procédé de commande d'un dispositif de climatisation ou de refroidissement de l'intérieur d'une enceinte fermée comportant au moins un tube de Hilsch-Ranque.

L'invention se rapporte plus particulièrement à un procédé de commande d'un dispositif de climatisation ou de refroidissement frigorifique ou de chauffage de l'intérieur d'une enceinte fermée, le dispositif comportant au moins une source d'air comprimé qui alimente au moins un tube de Hilsch-Ranque dit tube "vortex" en air comprimé à une pression d'injection, le tube vortex de Hilsch-Ranque comportant :

- au moins un orifice tangentiel d'injection d'air comprimé à l'intérieur du tube vortex de Hilsch-Ranque qui est agencé à proximité d'une première extrémité du tube vortex de Hilsch-Ranque, l'air injecté formant un premier courant d'air tourbillonnaire incident en direction d'une deuxième extrémité 538) du tube vortex de Hilsch-Ranque ;
- une soupape conique qui obture partiellement un premier orifice d'expulsion de la deuxième extrémité du tube vortex de Hilsch-Ranque de manière qu'une première fraction du courant d'air chaud incident soit expulsée à l'extérieur de l'enceinte tandis qu'une deuxième fraction du courant d'air est réfléchie en direction de la première extrémité du tube vortex de Hilsch-Ranque en formant un deuxième courant d'air tourbillonnaire concentrique intérieurement au premier courant tourbillonnaire, le courant d'air réfléchi étant refroidi par échange de chaleur avec le courant d'air incident ;
- un orifice de sortie, dite froide, de l'air réfléchi qui est agencé à la première extrémité du tube vortex de Hilsch-Ranque de manière à laisser sortir la deuxième fraction du courant d'air froid à l'intérieur de l'enceinte.

Les dispositifs de climatisation ou de refroidissement utilisent généralement des fluides caloporteurs considérés comme polluants tels que les chlorofluorocarbones (CFC).

Pour résoudre ce problème, il est connu de produire de l'air froid en utilisant des tubes dit tubes vortex de Hilsch-Ranque, tels que divulgués par exemple dans le document US-A-1.952.281.

La régulation de la température à l'intérieur d'une enceinte refroidie ou climatisée par de tels dispositifs est généralement commandée en agissant sur le débit d'air froid sortant de la première extrémité du tube. Ceci est réalisé en modulant la fraction d'air chaud expulsé par la deuxième extrémité du tube en agissant sur la soupape conique.

Cependant, un tel procédé de commande nécessite d'agir sur la soupape conique par l'intermédiaire d'un moteur. Un tel dispositif comporte donc des pièces mobiles qui sont susceptibles d'être usées prématurément.

Or, il est indispensable, notamment pour le dispositif de refroidissement, de disposer d'un dispositif robuste et fiable. En effet, si une défaillance intervient sur un dispositif de refroidissement d'une chambre froide, la chaîne du froid, qui garantit que les éléments refroidis sont bien conservés, risque d'être brisée.

De plus, un tel procédé de commande induit une consommation superflue d'énergie, notamment pour comprimer l'air injecté, car, en cas de faible débit d'air froid, une grande fraction, dite chaude, de l'air injecté est expulsé en pure perte par l'orifice d'expulsion de la deuxième extrémité du tube.

Pour résoudre ces problèmes, l'invention propose un procédé de commande du type décrit précédemment, caractérisé en ce que la soupape conique est préréglée de manière que la première fraction d'air chaud et la deuxième fraction d'air froid soient constantes durant le déroulement du procédé et en ce qu'il comporte une étape de commande de la pression d'injection de l'air comprimé.

Selon d'autres caractéristiques de l'invention :

- la température de sortie du courant d'air froid est commandée en agissant uniquement sur la pression d'injection de l'air dans le tube vortex de Hilsch-Ranque selon une loi de commande prédéterminée ;
- le procédé comporte une étape de calcul de la température de sortie du courant d'air froid préalable à l'étape de commande de la pression d'injection au cours de laquelle ladite température de sortie est calculée en retranchant une valeur constante prédéterminée à la température d'injection de l'air comprimé,
  et le procédé comporte aussi une étape de correction de la température de sortie du courant d'air froid calculée, qui est déclenchée lorsque ladite température de sortie durant l'étape préalable de calcul est inférieure à une température minimale et au cours de laquelle la température de sortie est corrigée de manière à être supérieure ou égale à ladite température minimale ;
- la source d'air comprimé est un compresseur d'air qui est aspire l'air ambiant à l'extérieur de l'enceinte, la température d'injection étant proportionnelle à la température extérieure à l'enceinte ;
- l'enceinte est un habitacle de véhicule automobile à bord duquel le dispositif de climatisation est embarqué et le compresseur d'air est entraîné par le moteur thermique du véhicule automobile par l'intermédiaire d'une pompe hydraulique et d'un moteur hydraulique ;
- la pression d'injection est commandée par impulsions à une pression d'injection qui est prédéterminée, la durée de chaque impulsion étant déterminée de manière que l'enceinte soit maintenue à une température de consigne ;

- la durée de chaque impulsion est déterminée en fonction de la température ambiante à l'intérieur de l'enceinte, de la température d'injection d'air comprimé dans le tube vortex de Hilsch-Ranque, et de la température de consigne ;
- la durée de chaque impulsion est déterminée en prenant en compte l'équilibre entre la somme des déperditions de chaleur à travers les parois de l'enceinte par unité de temps et la quantité de chaleur à enlever pour refroidir l'air à l'intérieur de l'enceinte jusqu'à la température de consigne ; et la quantité de chaleur susceptible d'être absorbée par l'air froid sortant de chaque tube vortex de Hilsch-Ranque pour ladite unité de temps ;
- l'air est asséché par des moyens de dessiccation avant son injection dans chaque tube vortex de Hilsch-Ranque de manière que son point de rosée soit inférieur à la température de sortie de l'air.

L'invention se rapporte aussi à un dispositif pour la mise en oeuvre du procédé réalisé selon les enseignements de l'invention, caractérisé en ce qu'il comporte une pluralité de tubes vortex de Hilsch-Ranque qui sont alimentés en parallèle par au moins une source commune d'air comprimé et en ce que chaque tube vortex de Hilsch-Ranque comporte une soupape conique réglable uniquement manuellement.

D'autres caractéristiques et avantages apparaîtront au cours de la lecture de la description détaillée qui va suivre pour la compréhension de laquelle on se reportera aux dessins annexés parmi lesquels :

- la figure 1 est un schéma qui représente un dispositif de refroidissement embarqué dans un véhicule de transport frigorifique ;
- la figure 2 est une vue en coupe axiale qui représente un tube vortex de Hilsch-Ranque ;
- la figure 3 est un schéma-bloc qui représente un procédé de commande du dispositif de refroidissement frigorifique de la figure 1 ;
- la figure 4 est un schéma qui représente un dispositif de climatisation embarqué à bord d'un véhicule automobile ;

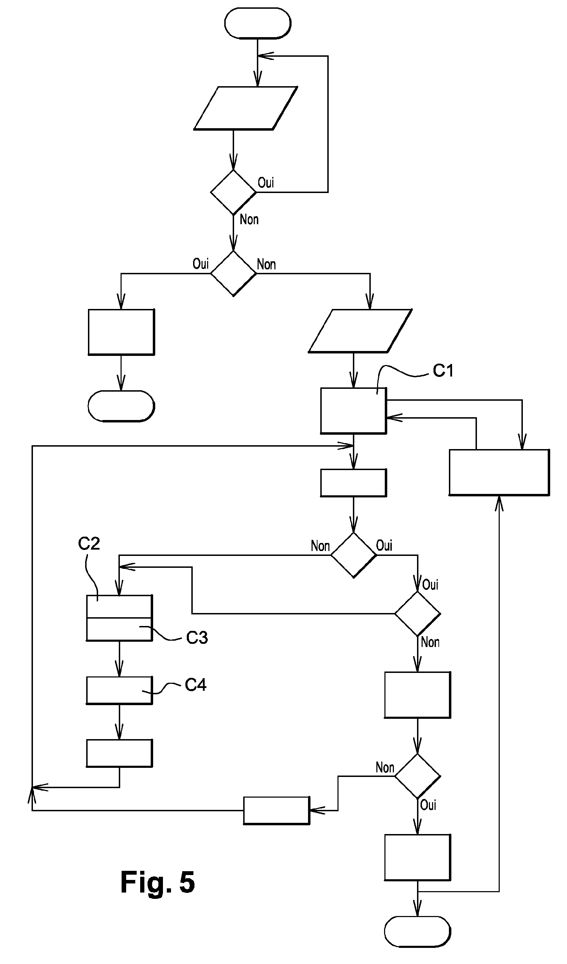

- la figure 5 est un schéma-bloc qui représente un procédé de commande du dispositif de climatisation de la figure 4.

Dans la suite de la description, des éléments ayant des fonctions identiques, analogues ou similaires seront désignés par des mêmes numéros de référence.

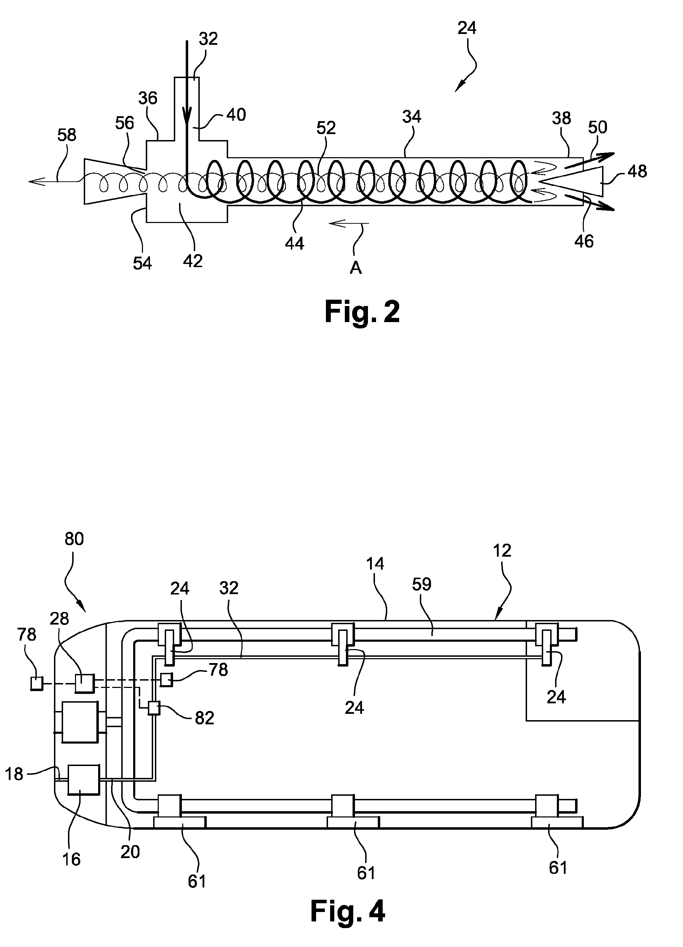

Dans la suite de la description, on adoptera de manière non limitative une orientation axiale dirigée d'arrière en avant indiquée par la flèche "A" de la figure 2.

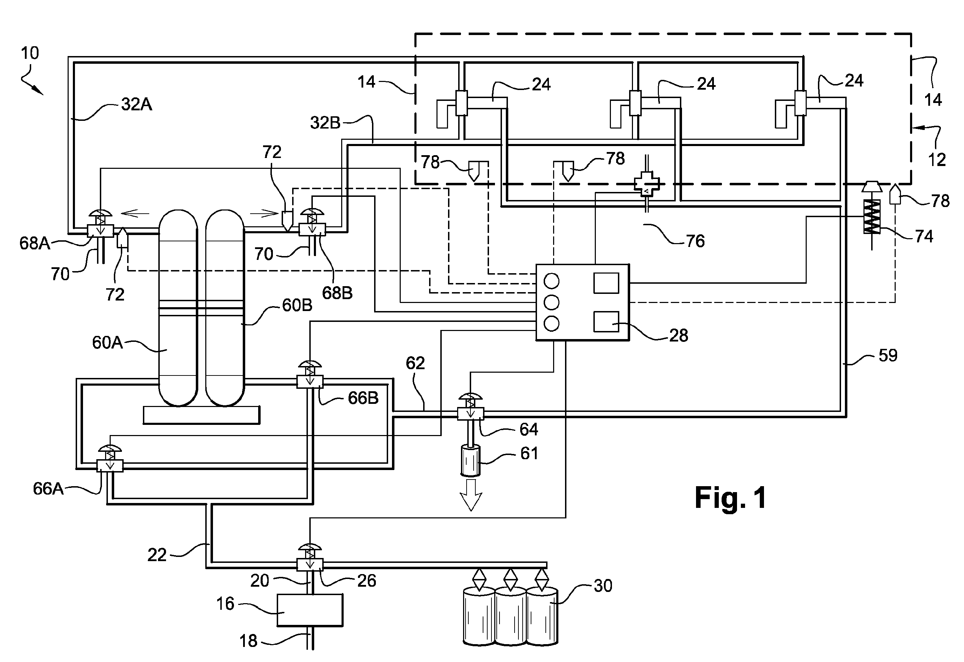

On a représenté à la figure 1 un dispositif de refroidissement frigorifique 10 qui est destiné à refroidir une enceinte 12 fermée hermétiquement. L'enceinte 12 fermée est ici formée par une chambre froide d'un véhicule automobile de transport frigorifique (non représenté) dans lequel le dispositif de refroidissement 10 est embarqué.

Selon une variante non représentée de l'invention, le dispositif de refroidissement 10 est aussi adapté pour refroidir une enceinte frigorifique immobile.

L'enceinte 12 est fermée horizontalement dans tous les sens par quatre parois verticales 14 et verticalement dans les deux sens par une paroi supérieure (non représentée) et par une paroi inférieure (non représentée).

Les parois 14 sont équipées de moyens d'isolation thermique de la l'enceinte 12 avec l'extérieur. Les moyens d'isolation thermique sont caractérisés par leur coefficient général de transmission thermique "K".

L'une des parois de la chambre froide est aussi équipée d'une porte d'accès (non représentée) isolée thermiquement qui est susceptible d'être fermée de manière hermétique.

L'enceinte 12 est destinée à être maintenue à une température de consigne "$\theta_c$" par le dispositif de refroidissement 10. La température de consigne "$\theta_c$" est par exemple inférieure à 0°C. La température de consigne "$\theta_c$" est par exemple de -25°C.

Le dispositif de refroidissement 10 comporte au moins une source d'air comprimé. Le dispositif de refroidissement 10 comporte ici deux sources d'air comprimé.

Une première source d'air comprimé 16 est formée par un compresseur d'air 16 qui est entraîné par un moteur électrique ou thermique. Le moteur est avantageusement autonome et indépendant du moteur de traction (non représenté) du véhicule afin d'assurer un fonctionnement continu du compresseur d'air 16 même lorsque le moteur de traction du véhicule automobile est arrêté.

Le compresseur d'air 16 comporte une conduite d'aspiration 18 par laquelle de l'air extérieur à l'enceinte 12 est aspiré, et il comporte une conduite de refoulement 20 par laquelle l'air comprimé est refoulé du compresseur d'air 16. Le compresseur d'air 16 est par exemple sélectionné pour que l'air soit comprimé à une pression constante comprise entre 7,5 et 10,5 bars.

La conduite de refoulement 20 est raccordée à une conduite d'alimentation 22 de tubes vortex de Hilsch-Ranque 24 par l'intermédiaire d'une vanne d'alimentation 26 trois voies commandée par une unité électronique de commande 28.

Une deuxième source d'air comprimé 30 est formée par des accumulateurs d'air 30, tels que des bouteilles. Les accumulateurs d'air 30 sont par exemple capables d'emmagasiner 300 litres d'air comprimé à une pression de 300 bars.

Cette deuxième source d'air comprimé 30 est réservée à un usage de sécurité en permettant de faire fonctionner le dispositif de refroidissement 10 lorsque le compresseur d'air 16 est en panne. Ainsi, il est possible d'intervenir sur le compresseur d'air 16 en évitant de briser la chaîne du froid.

Les accumulateurs d'air 30 sont aussi raccordés à la conduite d'alimentation 22 par l'intermédiaire de la troisième voie de la vanne d'alimentation 26.

La vanne d'alimentation 26 peut ainsi occuper une première position dans laquelle la conduite d'alimentation 22 est alimentée en air comprimé uniquement par le compresseur d'air 16, une deuxième position dans laquelle la conduite d'alimentation 22 est alimentée en air comprimé uniquement par les accumulateurs d'air 30, et une troisième position de fermeture totale dans laquelle la conduite d'alimentation 22 est totalement coupée des deux sources d'air comprimé 16, 30.

Le dispositif de refroidissement 10 comporte une pluralité de tubes vortex de Hilsch-Ranque 24 qui sont alimentés en parallèles par au moins un circuit d'alimentation 32 alimenté en air comprimé par la conduite d'alimentation 22.

Le dispositif de refroidissement 10 comporte par exemple trois tubes vortex de Hilsch-Ranque 24. On comprendra cependant que ce nombre n'est donné qu'à titre d'exemple et que le dispositif de refroidissement 10 est susceptible de comporter au moins un tube vortex de Hilsch-Ranque 24.

En raison de l'humidité de l'air aspiré par le compresseur d'air 16, et comme cela sera expliqué plus en détail par la suite, le dispositif de refroidissement 10 comporte ici deux circuits parallèles d'alimentation 32A, 32B en air comprimé. Les tubes vortex de Hilsch-Ranque 24 sont susceptibles d'être alimentés alternativement par l'un puis l'autre des circuits d'alimentation 32A, 32B.

De manière non limitative, les tubes vortex de Hilsch-Ranque 24 sont au nombre de trois. Ils sont tous identiques, par la suite, un seul de ces tubes 24 sera décrit.

Un tube vortex de Hisch-Ranque 24 est représenté plus en détail à la figure 2. Il comporte un corps tubulaire 34 cylindrique de révolution d'axe longitudinal qui comporte une première extrémité avant 36 et une deuxième extrémité arrière 38.

Un orifice tangentiel d'injection 40 d'air comprimé à l'intérieur du corps tubulaire 34 est agencé à proximité de la première extrémité avant 36 dans une chambre d'entrée 42. L'orifice d'injection 40 est agencé de manière que l'air injecté forme un premier courant d'air tourbillonnaire 44 incident en direction de la deuxième extrémité arrière 38 du corps tubulaire 34.

La chambre d'entrée 42 est aussi conformée de manière à provoquer une accélération de la rotation de l'air comprimé injecté. Sous l'effet de la force centrifuge, la pression d'air à la périphérie du corps tubulaire 34 augmente, et une dépression est formée à l'intérieur du courant d'air tourbillonnaire incident 44.

L'extrémité arrière 38 du corps tubulaire 34 est ouverte par un orifice d'expulsion 46. Une soupape conique 48 obture partiellement l'orifice d'expulsion 46 de la deuxième extrémité arrière 38 du corps tubulaire 34. La soupape conique 48 présente une face avant conique coaxiale au corps tubulaire 34 de manière que le sommet du cône soit tourné vers l'intérieur du corps tubulaire 34. Le diamètre de la base est sensiblement égal au diamètre de l'orifice d'expulsion 46.

La soupape conique 48 est réglable axialement, par exemple au moyen d'une vis (non représentée), de manière à pouvoir écarter axialement la périphérie de la base de la soupape conique 48 du bord de l'orifice d'expulsion 46.

Une première fraction "FC" du courant d'air tourbillonnaire incident 44 est expulsée à l'extérieur de l'enceinte 12 par l'espace réservé entre la soupape conique 48 et le bord de l'orifice d'expulsion 46 sous forme d'un courant d'air chaud 50 tandis qu'une deuxième fraction "FF" du courant d'air tourbillonnaire incident 44 est réfléchie en direction de la première extrémité avant 36 du corps tubulaire 34 en formant un deuxième courant d'air tourbillonnaire 52 concentrique intérieurement au premier courant d'air tourbillonnaire incident 44.

Le courant d'air tourbillonnaire réfléchi 52 est refroidi par transfert de chaleur radialement vers le courant d'air tourbillonnaire incident 44.

La première extrémité avant 36 du corps tubulaire 34 est fermée par une paroi radiale 54 dans laquelle est réalisé un orifice de sortie 56, dite froide, de manière à laisser sortir la deuxième fraction "FF" du courant d'air tourbillonnaire réfléchi 52 sous forme d'un courant d'air froid 58 à l'intérieur de l'enceinte 12.

Un tel tube vortex de Hilsch-Ranque 24 fonctionne sous l'action de l'air comprimé injecté avec des régimes de rotation de l'air qui sont par exemple de l'ordre de 500000 à 1000000 de tours/min. Ces vitesses de rotation provoquent des bruits de jet d'air qui sont avantageusement étouffés par la pose d'un silencieux à l'orifice arrière d'expulsion 46 du courant d'air chaud 50.

En variante ou en combinaison, un silencieux peut être agencé à l'orifice 56 avant de sortie du courant d'air froid 58.

La température de sortie "$\theta_{SF}$" du courant d'air froid 58 dépend principalement de trois paramètres qui sont la pression d'injection "$P_{inj}$", la température d'injection "$\theta_{inj}$" de l'air et la fraction "FC" du courant d'air chaud 50 expulsé par la soupape conique 48.

En règle générale, la chute de température entre la température d'injection de l'air "$\theta_{inj}$" et la température de

sortie froide "$\theta_{SF}$" est globalement inversement proportionnelle à la pression d'injection "$P_{inj}$".

Le courant d'air chaud 50 expulsé par les tubes vortex de Hilsch-Ranque 24 est expulsé à l'extérieur de l'enceinte 12 par l'intermédiaire d'une conduite d'échappement 59 qui comporte des orifices d'entrée qui sont chacun raccordé à un orifice d'expulsion 46 d'un tube vortex de Hilsch-Ranque 24 associé et un orifice d'échappement 61 qui est agencé à l'extérieur de l'enceinte 12 frigorifique.

Pour une application de refroidissement frigorifique, la température de sortie "$\theta_{SF}$" du courant d'air froid 58 est généralement inférieure à 0°C. Or, l'air comprimé comporte une proportion d'humidité telle la température de sortie "$\theta_{SF}$" du courant d'air froid 58 sortant du tube vortex de Hilsch-Ranque 24 est inférieure au point de rosée. Cette humidité risque alors de se condenser puis de former de la glace à l'intérieur de l'enceinte 12.

Pour éviter ce problème, un dessiccateur d'air 60A, 60B est interposé dans chaque circuit d'alimentation 32A, 32B de manière que l'air comprimé soit desséché avant d'être injecté dans les tubes vortex de Hilsch-Ranque 24. Ainsi, l'air sera desséché de manière que son point de rosée soit abaissé au dessous de la température de sortie "$\theta_{SF}$" de l'air froid, par exemple le point de rosée de l'air desséché est de -40°C.

Les dessiccateurs d'air 60A, 60B ont besoin d'être régénérés régulièrement afin d'expulser sous forme de vapeur d'eau l'humidité retenue. Le fait de disposer de deux circuits parallèles d'alimentation 32A, 32B permet de régénérer le dessiccateur d'air 60A, 60B d'un circuit d'alimentation 32A, 32B pendant que les tubes de Hilsch-Ranque 24 sont alimentés par l'autre circuit d'alimentation 32B, 32A.

Dans un soucis d'optimisation la consommation globale d'énergie du dispositif de refroidissement 10, la chaleur permettant d'évaporer l'humidité est fournie par le courant d'air chaud 50 expulsé par les tubes vortex de Hilsch-Ranque 24.

Le courant d'air chaud 50 est conduit jusqu'aux dessiccateurs d'air 60A, 60B par une conduite de dérivation 62 qui est branchée en dérivation sur la conduite d'échappement 59. La conduite de dérivation 62 comporte une fourche afin d'alimenter en parallèle chacun des deux circuits parallèles de réchauffement en amont du dessiccateur d'air 60A, 60B associé.

Le courant d'air chaud 50 est destiné à entrer dans le dessiccateur d'air 60A, 60B par le même orifice d'entrée que l'air comprimé. Ainsi, chaque circuit de réchauffement est embranché sur un circuit associé d'alimentation 32A, 32B en amont du dessiccateur d'air 60A, 60B associé.

La dérivation du courant d'air chaud 50 dans la conduite de dérivation 62 est commandée par une vanne de dérivation 64 trois voies qui est agencée à l'embranchement entre la conduite d'échappement 59 et la conduite de dérivation 62.

Puis, l'aiguillage du courant d'air chaud 50 ainsi dévié vers l'un ou l'autre des dessiccateurs d'air 60A, 60B est commandé par une vanne de régulation 66A, 66B trois voies qui est agencée à l'embranchement entre chaque circuit d'alimentation 32A, 32B et conduite de dérivation 62. Les vannes de régulation 66A, 66B sont commandées entre une position d'alimentation dans laquelle le courant d'air chaud 50 est complètement bloqué, l'air comprimé alimentant le dessiccateur d'air 60A, 60B associé, et une position d'assèchement dans laquelle un mélange d'air comprimé et de courant d'air chaud 50 alimente le dessiccateur d'air 60A, 60B associé.

Le courant d'air chaud 50 chargé d'humidité sortant du dessiccateur d'air 60A, 60B régénéré est ensuite évacué vers l'extérieur de l'enceinte 12 frigorifique sans être injecté dans les tubes vortex de Hilsch-Ranque 24. A cet effet, une vanne d'évacuation 68A, 68B trois voies est agencée dans chaque circuit d'alimentation 32A, 32B en aval du dessiccateur d'air 60A, 60B. Les vannes d'évacuation 68A, 68B comportent un orifice d'évacuation 70 qui est raccordé à l'extérieur de l'enceinte 12. La vanne d'évacuation 68A, 68B est susceptible d'occuper une position de régénération dans laquelle l'air qui arrive depuis le dessiccateur d'air 60A, 60B est entièrement détourné vers l'orifice d'évacuation 70 et une position d'alimentation dans laquelle l'air qui arrive depuis le dessiccateur d'air 60A, 60B est entièrement conduit vers l'orifice d'injection 40 les tubes vortex de Hilsch-Ranque 24.

En outre, pour contrôler l'efficacité des dessiccateurs d'air 60A, 60B, chaque circuit d'alimentation 32A, 32B est muni d'un hygrostat 72 qui est apte à mesurer le taux d'humidité "TH" présent dans l'air circulant dans le circuit d'alimentation 32A, 32B associé en aval des dessiccateurs d'air 60A, 60B. Chaque hygrostat 72 est susceptible d'envoyer l'unité électronique de commande 28 un signal représentatif du taux d'humidité "TH" mesuré.

Par ailleurs, l'air introduit à l'intérieur de l'enceinte 12 par l'intermédiaire du dispositif de refroidissement 10 est susceptible d'augmenter la pression d'air à l'intérieur de l'enceinte 12 qui est hermétiquement fermée. Pour éviter que la pression n'augmente trop, il est prévu une électrovanne 74 qui est commandée entre une position d'obturation d'un orifice d'équilibrage d'une paroi de l'enceinte 12 et une position de décompression dans laquelle de l'air ambiant froid en surpression est susceptible de sortir vers l'extérieur par l'orifice d'équilibrage sous l'effet de la différence de pression entre l'intérieur et l'extérieur e l'enceinte 12.

L'électrovanne 74 est commandée par l'unité électronique de commande 28 en fonction des mesures effectuées par un pressostat différentiel 76 qui agencé dans une paroi de l'enceinte 12 frigorifique et qui mesure la pression différentielle "$\Delta P$" entre l'intérieur et l'extérieur de l'enceinte 12. Le pressostat différentiel 76 est susceptible d'envoyer un signal représentatif de la mesure de la pression différentielle "$\Delta P$" à l'unité électronique de commande 28.

Ainsi, lorsque la pression différentielle "ΔP" mesurée entre la pression à l'intérieur de l'enceinte 12 et la pression à l'extérieur de l'enceinte 12 dépasse un seuil de surpression, l'électrovanne 74 est commandée vers sa position de décompression de manière à expulser l'air responsable de la surpression.

L'électrovanne 74 est commandée vers sa position d'obturation lorsque la pression différentielle "ΔP" mesurée entre l'intérieur et l'extérieur de l'enceinte 12 est inférieure ou égale à un deuxième seuil de sécurité. Le seuil de sécurité est choisi de manière que la pression à l'intérieur de l'enceinte 12 soit toujours supérieure à la pression extérieure afin d'éviter que de l'air extérieur chaud ne pénètre à l'intérieur de l'enceinte 12 par l'orifice d'équilibrage.

L'invention propose un procédé de commande dans lequel la source d'air comprimée 16, 30 est commandée par l'unité électronique de commande 28.

Pour mettre en oeuvre le procédé réalisé selon les enseignements de l'invention, la soupape conique 48 est préréglée de manière que les première "FC" et deuxième "FF" fractions d'air soient constantes durant le déroulement du procédé. La soupape conique 48 est réglée préalablement en fonction du débit maximal de courant d'air froid 58 susceptible d'être produit.

Ainsi, le procédé réalisé selon les enseignements de l'invention ne nécessite pas d'agir sur les éléments structurels qui constituent les tubes de Hilsch-Ranque 24. Ceci est d'autant plus avantageux lorsque le dispositif de refroidissement 10 comporte une pluralité de tubes vortex de Hilsch-Ranque 24.

La soupape conique 48 est par exemple réglée de manière que le débit de courant d'air chaud 50 expulsé par l'orifice d'expulsion 46 soit égal au débit de courant d'air froid 58 sortant par l'orifice de sortie froide 56, en d'autres termes, les première "FC" et deuxième "FF" fractions d'air sont égales à 50%.

La température de sortie "$\theta_{SF}$" du courant d'air froid 58 est commandée en agissant uniquement sur la pression d'injection "$P_{inj}$" de l'air comprimé dans le tube vortex de Hilsch-Ranque 24 selon une loi de commande prédéterminée.

Dans cette application pour le refroidissement frigorifique, la pression d'injection "$P_{inj}$" est plus particulièrement commandée par impulsions à une pression d'injection "$P_{inj}$" qui est prédéterminée de manière que la température ambiante "$\theta_{int}$" à l'intérieur de l'enceinte 12 soit maintenue égale à une température de consigne "$\theta_c$".

Par la suite la température ambiante à l'intérieur de l'enceinte 12 sera appelée température intérieure "$\theta_{int}$".

Lors des impulsions, la température de sortie "$\theta_{SF}$" du courant d'air froid 58 est déterminée en fonction de plusieurs paramètres. A titre d'exemple les paramètres peuvent être fixés de la manière suivante :

- la pression d'injection "$P_{inj}$" est fixée à 7 ou 10 bars en fonction du type de compresseur d'air 16 utilisé ;
- la température d'injection est fixée à 21 °C ;
- les fractions de courant d'air chaud "FC" et froid "FF" sont fixées à 50% par préréglage de la soupape conique 48.

Ainsi, la température de sortie "$\theta_{SF}$" du courant d'air froid 58, lors des impulsions, est prédéterminée. Le compresseur d'air 16 est par exemple sélectionné de manière que la température de sortie "$\theta_{SF}$" soit sensiblement égale à -30°C pour une température d'injection "$\theta_{inj}$" d'environ 21°C. La température du courant d'air chaud 50 est par exemple égale à 120°C.

La durée "t" de chaque impulsion est déterminée en fonction de la température intérieure "$\theta_{int}$", de la température d'injection "$\theta_{inj}$" d'air comprimé dans le tube vortex de Hilsch-Ranque 24, et de la température de consigne "$\theta_c$".

Plus particulièrement, la durée "t" de l'impulsion est déterminée en prenant en compte l'équation "EQ1" suivante :

$$\text{"EQ1"} : \qquad Q_{m,af} = Q_{dep} + Q_{ref}$$

dans laquelle $Q_{m,af}$ représente la quantité de chaleur susceptible d'être absorbée par le courant d'air froid 58 sortant du tube vortex de Hilsch-Ranque 24 pour une unité de temps "t";

$Q_{dep}$ représente la déperdition de chaleur à travers les parois de l'enceinte 12 pour la dite unité de temps "t" ; et

$Q_{ref}$ représente la quantité de chaleur à enlever pour refroidir l'air ambiant à l'intérieur de l'enceinte 12 jusqu'à la température de consigne "$\theta_c$".

La déperdition de chaleur $Q_{dep}$ à travers les parois de l'enceinte 12 est calculée selon l'équation "EQ2" suivante bien connue de l'homme du métier :

$$\text{"EQ2"} : \qquad Q_{dep} = K \cdot S_T \cdot \left(\theta_{ext} - \theta_C\right) \cdot t$$

dans laquelle "K" représente le coefficient général de transmission thermique des parois de l'enceinte 12 exprimé en $W/m^2.K$;

$S_T$ représente la surface des parois en $m^2$ ;

$\theta_{ext}$ représente la température ambiante de l'air à l'extérieur de l'enceinte 12 en K, appelée par la suite température extérieure ;

"$\theta_c$" représente la température de consigne en Kelvin.

La quantité de chaleur $Q_{ref}$ à enlever pour refroidir l'air ambiant à l'intérieur de l'enceinte 12 est calculée selon l'équation "EQ3" suivante bien connue de l'homme du métier :

$$"EQ3" : \qquad Q_{ref} = \rho_{int} \cdot V \cdot C_p \cdot \left( \theta_{int} - \theta_C \right)$$

dans laquelle $\rho_{int}$ représente la masse volumique de l'air ambiant à l'intérieur de l'enceinte 12 exprimée en $kg/m^3$ ;

V représente le volume de l'enceinte 12 exprimé en $m^3$ ;

Cp représente la chaleur massique de l'air à pression constante exprimée en kJ/kg ;

$\theta_{int}$ représente la température intérieure exprimée en K ;

"$\theta_c$" représente la température de consigne en K.

La quantité de chaleur $Q_{m,af}$ susceptible d'être absorbée par le courant d'air froid 58 est calculée selon l'équation "EQ4" suivante :

$$"EQ4" : \qquad Q_{m,af} = \mu \cdot \rho_{af} \cdot q_{m,e} \cdot h_{af} \cdot t$$

dans laquelle $\mu$ représente le rendement de la source d'air comprimé ;

$\rho_{af}$ représente la masse volumique de l'air froid sortant du tube vortex de Hilsch-Ranque 24 exprimée en $kg/m^3$ ;

$q_{m,e}$ représente le débit massique d'air froid exprimé en kg/s ;

$h_{af}$ représente la quantité de chaleur susceptible d'être absorbée par un kilogramme d'air froid sortant du tube vortex de Hilsch-Ranque 24 exprimée en fg/kg ;

t représente le temps exprimé en secondes.

A partir de l'équation d'équilibre "EQ1", il est possible de trouver la durée "t" d'une impulsion d'injection d'air comprimé pour que la température intérieure "$\theta_{int}$" soit égale à la température de consigne "$\theta_c$" selon l'équation "EQ5" suivante :

$$"EQ5" : \qquad t = \frac{\rho_{int} \cdot V \cdot C_p \cdot \left( \theta_{int} - \theta_{int}^{c} \right)}{\mu \cdot \rho_{af} \cdot q_{m,e} \cdot h_{af} - K \cdot S_T \cdot \left( \theta_{ext} - \theta_{int}^{c} \right)}$$

On constate que pour pouvoir calculer la durée "t" de l'impulsion, outre les constantes qui sont établis préalablement en fonction des propriétés physique de l'air ou des caractéristiques de la source d'air comprimé, il est nécessaire de connaître la valeur de paramètres qui sont susceptibles de changer au cours du procédé. Ces paramètres sont la température extérieure "$\theta_{ext}$", la température intérieure "$\theta_{int}$" et la température de consigne "$\theta_c$".

La température de consigne "$\theta_c$" peut-être prédéfinie ou bien réglée par l'utilisateur par exemple au moyen d'une interface adaptée d'entrée de données dans l'unité électronique de commande 28.

Les températures intérieure "$\theta_{int}$" et extérieure "$\theta_{ext}$" sont mesurées par au moins deux sondes thermiques 78 qui sont agencées respectivement à l'intérieur et à l'extérieur de l'enceinte 12 frigorifique. Chaque sonde thermique 78 comporte des moyens pour transmettre un signal représentatif de la température mesurée à l'unité électronique de commande 28.

Le tableau suivant représente les durées "t" d'impulsion en secondes du dispositif de refroidissement 10 commandé selon le procédé de l'invention en fonction de la température extérieure "$\theta_{ext}$" et de la température intérieure "$\theta_{int}$" pour atteindre une température de consigne "$\theta_c$" de -25°C pour une enceinte 12 frigorifique d'un volume de 12 $m^3$ et réalisée en un matériau très isolant ayant un coefficient général de transmission thermique "K" inférieur à 0,35 $kcal/m^2.K$.

| θint \ θext | 25 | 26 | 28 | 30 | 32 | 34 | 35 | 36 | 38 | 40 |
|---|---|---|---|---|---|---|---|---|---|---|
| -25 | 0 | 0 | 0 | 0 | 0 | 0 | 0 | 0 | 0 | 0 |
| -24 | 3 | 3 | 3 | 3 | 3 | 3 | 3 | 3 | 3 | 3 |
| -23 | 5 | 5 | 5 | 5 | 5 | 5 | 5 | 5 | 5 | 5 |
| -22 | 8 | 8 | 8 | 8 | 8 | 8 | 8 | 8 | 8 | 8 |
| -21 | 10 | 10 | 10 | 10 | 10 | 10 | 11 | 11 | 11 | 11 |
| -20 | 13 | 13 | 13 | 13 | 13 | 13 | 13 | 13 | 13 | 13 |
| -19 | 15 | 15 | 15 | 15 | 16 | 16 | 16 | 16 | 16 | 16 |
| -18 | 18 | 18 | 18 | 18 | 18 | 18 | 18 | 18 | 18 | 18 |
| -17 | 20 | 20 | 20 | 21 | 21 | 21 | 21 | 21 | 21 | 21 |
| -16 | 23 | 23 | 23 | 23 | 23 | 23 | 23 | 23 | 23 | 23 |
| -15 | 25 | 25 | 25 | 25 | 26 | 26 | 26 | 26 | 26 | 26 |
| -14 | 28 | 28 | 28 | 28 | 28 | 28 | 28 | 28 | 28 | 28 |
| -13 | 30 | 30 | 30 | 30 | 30 | 31 | 31 | 31 | 31 | 31 |
| -12 | 32 | 32 | 33 | 33 | 33 | 33 | 33 | 33 | 33 | 33 |
| -11 | 35 | 35 | 35 | 35 | 35 | 35 | 35 | 35 | 36 | 36 |
| -10 | 37 | 37 | 37 | 37 | 38 | 38 | 38 | 38 | 38 | 38 |
| -9 | 39 | 39 | 40 | 40 | 40 | 40 | 40 | 40 | 40 | 41 |
| -8 | 42 | 42 | 42 | 42 | 42 | 42 | 43 | 43 | 43 | 43 |
| -7 | 44 | 44 | 44 | 44 | 45 | 45 | 45 | 45 | 45 | 45 |
| -6 | 46 | 46 | 47 | 47 | 47 | 47 | 47 | 47 | 47 | 48 |

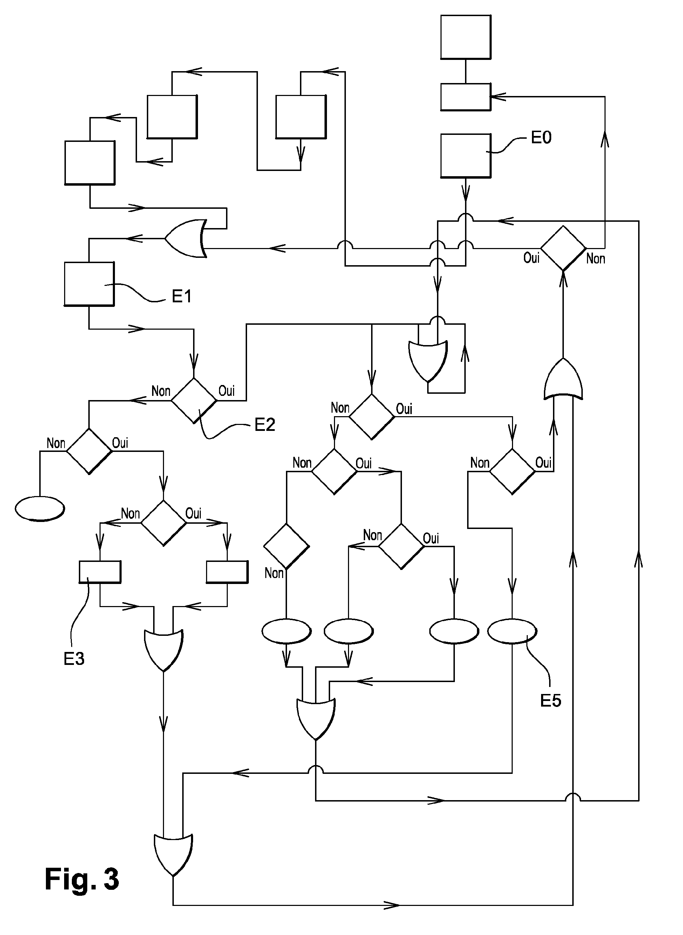

Le procédé de commande du dispositif de refroidissement frigorifique 10 est représenté à la figure 3. Lors du déroulement du procédé, toutes les actions de commande et de comparaison sont effectuées par l'unité électronique de commande 28.

Lors de l'initialisation "E0" du procédé, la température de consigne "$\theta_c$" est donnée en paramètre à l'unité électronique de commande 28.

Lors d'une première étape de mesure "E1", les mesures de la température intérieure "$\theta_{int}$", de la température extérieure "$\theta_{ext}$", de la pression différentielle "$\Delta P$" et du taux d'humidité "TH" sont transmises à l'unité électronique de commande 28.

Puis, lors d'une deuxième étape de comparaison "E2", la température intérieure "$\theta_{int}$" est comparée avec la température de consigne "$\theta_c$".

Si la température intérieure "$\theta_{int}$" est inférieure à la température de consigne "$\theta_c$", la température intérieure "$\theta_{int}$" est comparée à une température d'alarme "$\theta_{al}$" au-delà de laquelle la chaîne du froid risque d'être brisée.

Si la température d'alarme "$\theta_{al}$" est dépassée, une alarme est déclenchée.

Si la température intérieure "$\theta_{int}$" est comprise entre la température de consigne "$\theta_c$" et la température d'alarme "$\theta_{al}$", une troisième étape de commande de la pression d'injection "E3" est déclenchée au cours de laquelle les tubes vortex de Hilsch-Ranque 24 sont alimentés en air comprimé par le compresseur d'air 16.

La durée "t" de l'impulsion d'air comprimé injecté est calculée par l'unité électronique de commande 28 comme expliqué précédemment de manière que la température intérieure "$\theta_{int}$" redevienne égale à la température de consigne "$\theta_c$".

Lorsque la durée "t" de l'impulsion est dépassée, la vanne d'alimentation 26 est commandée vers sa position de fermeture totale. Ainsi, les tubes vortex de Hilsch-Ranque 24 ne sont plus alimentés en air comprimé.

Puis, le procédé revient à la première étape de mesure "E1".

A partir de la deuxième étape de comparaison "E2", lorsque la température intérieure "$\theta_{int}$" est inférieure ou égale à la température de consigne "$\theta_c$", le procédé déclenche une quatrième étape "E4" de contrôle de la pression qui est déclenchée lorsque la pression différentielle "$\Delta P$" entre l'intérieur et l'extérieur de l'enceinte 12 dépasse le seuil de surpression fixé. Au cours de cette étape, l'électrovanne 74 est commandée de manière à ce que la pression différentielle "$\Delta P$" soit égale au seuil de sécurité.

Lorsque la pression différentielle "$\Delta P$" est inférieure au seuil de surpression, et que le taux d'humidité "TH" à l'intérieur de enceinte 12 est supérieur à un seuil de givrage, une cinquième étape "E5" de régénération des dessiccateurs d'air 60A, 60B est déclenchée. Au cours de cette étape, les vannes de dérivation 64, d'évacuation 68A, 68B et de régulation 66A, 66B sont commandées de manière à régénérer l'un, puis l'autre des dessiccateurs d'air 60A, 60B.

Le procédé réalisé selon les enseignements de l'invention permet de refroidir très efficacement une enceinte 12 frigorifique par l'intermédiaire de tubes vortex de Hilsch-Ranque 24 en agissant uniquement sur la pression d'injection "$P_{inj}$" d'air comprimé.

Ceci est particulièrement avantageux car le procédé de refroidissement ne nécessite pas d'agir individuellement sur la soupape conique 48 de chacun des tubes vortex de Hilsch-Ranque 24, mais en agissant de manière centralisée sur la source d'air comprimé qui est commune à tous les tubes vortex de Hilsch-Ranque 24. Ainsi, le dispositif de refroidissement 10 est peu onéreux à fabriquer et il est aisé à commander.

Selon un deuxième mode de réalisation de l'invention, un procédé similaire est applicable à un dispositif de climatisation équipé de tubes vortex de Hilsch-Ranque 24.

On a représenté à la figure 4 un dispositif de climatisation 80 qui est destiné à refroidir une enceinte 12 fermée. L'enceinte 12 est ici formée par l'habitacle d'un véhicule automobile, tel qu'un autobus, dans lequel le dispositif de climatisation 80 est embarqué.

Selon une variante non représentée de l'invention, le dispositif de climatisation est conçu de manière à pouvoir être embarqué dans une cabine d'ascenseur afin de pouvoir en climatiser l'intérieur.

Selon une autre variante non représentée de l'invention, le dispositif de climatisation est aussi adapté pour des applications immobiles, telles que la climatisation de pièces d'un bâtiment.

L'enceinte 12 du véhicule est fermée par quatre parois verticales 14, par une paroi inférieure (non représentée) et par une paroi supérieure (non représentée).

Comme pour le premier mode de réalisation, le dispositif de climatisation 80 comporte principalement une source d'air comprimé qui alimente, par l'intermédiaire d'un circuit d'alimentation 32A, 32B, une pluralité de tubes vortex de Hilsch-Ranque 24. Une conduite d'échappement 59 achemine le courant d'air chaud 50 expulsé par les tubes vortex de Hilsch-Ranque 24 jusqu'à un orifice d'échappement 61 qui débouche à l'extérieur de l'enceinte 12.

La source d'air comprimé est ici formée par un compresseur d'air 16 qui est entraîné par un moteur électrique autonome (non représenté). Le moteur électrique est par exemple alimenté par un accumulateur d'électricité qui est rechargé régulièrement par un alternateur entraîné par le moteur thermique du véhicule automobile.

Selon une variante non représentée de l'invention, le compresseur d'air est entraîné par le moteur thermique du véhicule automobile par l'intermédiaire d'une pompe hydraulique et d'un moteur hydraulique.

L'air est aspiré par le compresseur d'air 16 à l'extérieur de l'enceinte 12 par une conduite d'aspiration 18.

Avantageusement, le compresseur d'air 16 est sélectionné de manière à assurer le renouvellement de l'air de l'habitacle en fonction du nombre maximal de personnes que le véhicule automobile est susceptible de transporter simultanément. En effet, un passager enfermé dans l'enceinte 12 consomme un débit d'air qui est par exemple d'environ 4 m$^3$/h. Ce débit est à multiplier par le nombre maximal de personnes que le véhicule peut transporter simultanément, par exemple 100 personnes. L'air disponible dans l'enceinte 12 dépend du volume de l'enceinte.

Pour éviter l'asphyxie, l'air doit être renouvelé selon un taux de renouvellement "$\tau_r$" calculé selon l'équation "EQ6" suivante :

$$\text{"EQ6"} : \qquad \tau_r = \frac{q_{VS}}{V_u}$$

dans laquelle "$q_{vs}$" représente le débit d'air expiré par le nombre maximal de passager que l'habitacle du véhicule est susceptible de contenir simultanément exprimé en m$^3$/h ;

$V_u$ représente le volume de l'habitacle exprimé en m$^3$.

A partir de ce calcul, le compresseur d'air 16 sélectionné est par exemple susceptible de débiter 0,84 m$^3$/h pour assurer le renouvellement de l'air.

S'agissant d'un dispositif de climatisation 80, l'objectif est ici de refroidir la température intérieure "$\theta_{int}$" de l'enceinte 12 de quelques degrés par rapport à la température extérieure "$\theta_{ext}$" notamment lorsque la température extérieure "$\theta_{ext}$" est considéré comme chaude, par exemple au-delà de 25°C. Par exemple, le dispositif de climatisation 80 est conçu pour que la température intérieure "$\theta_{int}$" soit de 6°C inférieure à la température extérieure "$\theta_{ext}$".

Avantageusement, le courant d'air froid est soufflé à la hauteur de la tête d'un individu de taille moyenne en considérant la population qui est susceptible d'être présente dans l'enceinte. Ainsi, la tête des individus est refroidie en priorité, car c'est là qu'est logée l'hypothalamus qui est le régulateur thermique du corps humain. Il s'agit d'un principe que nous appelons "Rafraîchissement Occipital Humain" (en abrégé le R.O.H).

Pour pouvoir connaître la température intérieure "$\theta_{int}$", une sonde thermique 78 est agencée à l'intérieur de l'enceinte 12.

Cet objectif est atteint en maintenant la température de sortie "$\theta_{SF}$" du courant d'air froid 58 sortant des tubes vortex de Hilsch-Ranque 24 aussi proche que possible du point de rosée, qui est ici de 0°C, sans que cette température de sortie "$\theta_{SF}$" du courant d'air froid 58 soit inférieure au point de rosée.

La température du courant d'air chaud 50 est alors par exemple égale à 120°C.

La température de sortie "$\theta_{SF}$" du courant d'air froid 58 soufflé par l'orifice de sortie froide 56 des tubes vortex de Hilsch-Ranque 24 étant supérieure au point de rosée de l'air dans des conditions atmosphérique normale, le dispositif ne comporte pas de dessiccateur d'air 60A, 60B, et il ne comporte qu'un unique circuit d'alimentation 32.

Le dispositif de climatisation 80 est commandé selon un procédé de commande dans lequel, de manière similaire à ce qui a été présenté dans le premier mode de réalisation, la température de sortie "$\theta_{SF}$" du courant d'air froid 58 est commandée en agissant uniquement sur la pression d'injection "$P_{inj}$" de l'air dans le tube vortex de Hilsch-Ranque 24 selon une loi de commande prédéterminée.

Cependant, à la différence du premier mode de réalisation, l'air comprimé est ici injecté de manière continue et non par impulsions.

De plus, la température de sortie "$\theta_{SF}$" du courant d'air froid 58 est régulée automatiquement par l'unité électronique de commande 28 en faisant varier la pression d'injection "$P_{inj}$" de l'air comprimé de manière que la température de sortie "$\theta_{SF}$" soit toujours supérieure ou égale à une température minimale "$\theta_{min}$", par exemple 0°C, pour éviter la condensation de l'humidité présente dans le courant d'air froid à la sortie du tube vortex de Hilsch-Ranque. A cet effet, le dispositif de climatisation 80 comporte un régulateur-détendeur pneumatique 82 qui est interposé dans le circuit d'alimentation 32 pour ajuster la pression d'injection "$P_{inj}$" de l'air comprimé. Le régulateur-détendeur 82 est commandé par l'unité électronique de commande 28.

On rappelle que les paramètres qui influent sur la température de sortie "$\theta_{SF}$" du courant d'air froid 58 sont les suivants :

- le réglage de la soupape conique 48 qui détermine la fraction "FF" d'air réfléchi vers la sortie du tube vortex de Hilsch-Ranque 24 ;
- la température d'injection "$\theta_{inj}$" de l'air comprimé ;
- la pression d'injection "$P_{inj}$" de l'air comprimé.

Dans le procédé de commande selon l'invention, la soupape conique 48 est préréglée de manière que la fraction "FF" d'air réfléchi reste constante durant le déroulement du procédé. Pour un dispositif de climatisation 80, cette fraction "FF" d'air réfléchi est par exemple égale à 70%.

La température d'injection "$\theta_{inj}$" de l'air est généralement égale à la température extérieure "$\theta_{ext}$" de l'air lors de son aspiration dans le compresseur d'air 16 à laquelle il faut ajouter une constante qui est par exemple égale à 10°C ou 15°C en fonction du type de compresseur d'air 16 utilisé. Pour pouvoir connaître la température d'injection, le dispositif de climatisation 80 comporte donc une sonde de température 78 qui est susceptible de transmettre à l'unité électronique de commande 28 un signal représentatif de la température extérieure "$\theta_{ext}$" mesurée à partir de laquelle il est possible de connaître la température d'injection "$Q_{inj}$".

La pression maximale d'injection "$P_{max}$" à laquelle l'air peut être injecté dépend du compresseur d'air 16 sélectionné comme indiqué précédemment. La pression maximale d'injection "$P_{max}$" est par exemple égale à 8 bars.

Dans le procédé réalisé selon les enseignements de l'invention, le compresseur d'air 16 comprime en permanence l'air à la pression maximale "$P_{max}$", puis, la pression d'injection "$P_{inj}$" est régulée en commandant le régulateur-détendeur 82.

Ainsi, la pression d'injection "$P_{inj}$" de l'air est susceptible d'être commandée dans une plage de pressions d'injection comprise entre 1 et 8 bars. Sachant que la chute de température "$\Delta T$" entre la température d'injection "$\theta_{inj}$" et la température de sortie "$\theta_{SF}$" du courant d'air froid 58 est inversement proportionnelle à la pression "$P_{inj}$" de l'air comprimé injecté, la limitation de la pression d'injection "$P_{inj}$" à 8 bars entraîne ipso facto que la chute de température "$\Delta T$" sera aussi limitée. La chute maximale de température est par exemple de 41°C.

La fraction "FF" d'air réfléchi étant constante, il est possible de déduire la pression d'injection "$P_{inj}$" de l'air en utilisant l'équation "EQ7" suivante :

"EQ7" :

$$\Delta T = -0{,}0397 \cdot \left(P_{inj}\right)^4 + 0{,}8377 \cdot \left(P_{inj}\right)^3 - 6{,}5497 \cdot \left(P_{inj}\right)^2 + 24{,}912 \cdot \left(P_{inj}\right) - 5{,}3973$$

dans laquelle "ΔT" représente la chute de température entre la température d'injection "θ$_{inj}$" et la température de sortie froide "θ$_{SF}$";

et "P$_{inj}$" représente la pression d'injection de l'air comprimé.

Cette équation "EQ7" est ici obtenue par interpolation, par exemple par la méthode des moindres carrés, à partir d'un tableau de valeurs fourni par le fabricant des tubes vortex de Hilsch-Ranque 24. Il s'agit ici d'un polynôme du quatrième degré.

Cette équation "EQ7" est une approximation correcte pour une température d'injection "θ$_{inj}$" égale à une température de référence "θ$_{ref}$" qui est ici égale à 21°C. Lorsque la température d'injection "θ$_{inj}$" diffère de cette température de référence "θ$_{ref}$", il est possible de multiplier la chute de température "ΔT" mesurée par un facteur de correction qui est égal à la température d'injection "θ$_{inj}$" divisée par la température de référence "θ$_{ref}$".

Une telle approximation est suffisante pour réaliser la fonction de climatisation du dispositif de climatisation 80 tout en gardant une précision suffisante pour que la température de sortie "θ$_{SF}$" du courant d'air froid 58 ne descende pas en deçà de la température minimale "θ$_{min}$" de 0°C.

Le procédé de commande du dispositif de climatisation 80 est à présent décrit.

Lors d'une première étape "C1" de mesure, la température extérieure "θ$_{ext}$" et la température intérieure "θ$_{int}$" sont mesurées par les sondes thermique 78 et transmises à l'unité électronique de commande 28.

Puis, une deuxième étape "C2" de calcul de la température de sortie "θ$_{SF}$" du courant d'air froid 58 est déclenchée lorsque la différence entre la température extérieure "θ$_{ext}$" et la température intérieure "θ$_{int}$" est inférieure à une valeur de confort qui est par exemple de 7°C. Au cours de cette étape, la température de sortie "θ$_{SF}$" est calculée en retranchant une valeur constante prédéterminée à une mesure de la température d'injection "θ$_{inj}$" de l'air comprimé.

La valeur constante prédéterminée est définie en fonction des caractéristiques du compresseur d'air 16 sélectionné, et notamment en fonction de la pression maximale d'injection "P$_{max}$" à laquelle l'air peut être comprimé. Cette valeur constante est plus particulièrement égale à la chute de température "ΔT" maximale qu'il est possible d'obtenir avec le compresseur d'air 16 et qui est par exemple égale à 41°C. En d'autres termes, la température de sortie "θ$_{SF}$" du courant d'air froid 58 ne peut pas être inférieure de plus de 41°C de la température d'injection "θ$_{inj}$" de l'air, cette chute de température "ΔT" étant obtenu pour la pression maximale d'injection "P$_{max}$".

Puis, une troisième étape "C3" suivante de correction de la température de sortie "θ$_{SF}$" du courant d'air froid 58 calculée durant la deuxième étape "C2" de calcul est déclenchée lorsque ladite température de sortie "θ$_{SF}$" est inférieure à la température minimale "θ$_{min}$" de 0°C. La température de sortie "θ$_{SF}$" est corrigée de manière à être supérieure ou égale à ladite température minimale "θ$_{min}$" de 0°C.

La température minimale "θ$_{min}$" est ici fixée à 0°C. Elle est bien entendu susceptible de changer en fonction des conditions atmosphérique dans lesquelles le véhicule automobile est plongé.

En fonction du résultat de cette dernière étape "C3", la chute de température "ΔT" entre la température d'injection "θ$_{inj}$" et la température de sortie "θ$_{SF}$" souhaitée du courant d'air froid 58 est connue.

La pression d'injection "P$_{inj}$" de l'air comprimé est alors calculée par résolution de l'équation d'interpolation "EQ7" lors d'une quatrième étape "C4" de commande. Lorsque cette équation "EQ7" admet plusieurs pressions d'injection "P$_{inj}$" en solution, la pression d'injection "P$_{inj}$" la plus élevée qui est comprise dans la plage de pression du compresseur d'air 16 est retenue par l'unité électronique de commande 28.

Puis, l'unité électronique de commande 28 pilote le régulateur-détendeur 82 de manière que la pression d'injection "P$_{inj}$" de l'air comprimé soit effectivement égale à la pression d'injection calculée.

Puis le procédé est réitéré par exemple à l'issue d'une durée de temporisation qui est par exemple égale à 60 secondes.

Grâce au procédé réalisé selon les enseignements de l'invention, il est donc possible de commander de manière centraliser une pluralité de tubes vortex de Hilsch-Ranque en agissant uniquement sur la pression d'injection "P$_{inj}$". Un tel procédé est peu onéreux et simple à mettre en oeuvre.

Selon un troisième mode de réalisation non représenté de l'invention, les dispositifs exposés aux premiers modes de réalisation de l'invention peuvent aussi être utilisés en tant que dispositifs de chauffage en acheminant le courant d'air chaud 50 expulsé du tube vortex de Hilsch-Ranque 24 vers l'endroit ou l'objet à chauffer.

Par exemple, la conduite d'échappement 59 du dispositif de climatisation 80 comporte un orifice débouchant à l'intérieur de l'enceinte 12. L'orifice est obturé par une vanne commandée. Lorsqu'il est nécessaire de chauffer l'enceinte 12, la vanne est alors commandée en ouverture.

La température du courant d'air chaud 50 peut pareillement être calculée en fonction de la pression d'injection "P$_{inj}$" de l'air comprimé et de la température d'injection "θ$_{inj}$" de l'air comprimé. Ainsi, il est possible de commander la température du courant d'air chaud 50 en agissant uniquement sur la pression d'injection "P$_{inj}$" de l'air par l'intermédiaire de l'unité électronique de commande 28.

On comprendra que ces modes de réalisation sont donnés à titre indicatif et que le procédé de commande est applicable pour tout dispositif de même type comportant des tubes vortex de Hilsch-Ranque qui sont utilisés pour refroidir ou réchauffer une enceinte ou un élément quelconque.

**Revendications**

1. Procédé de commande d'un dispositif de climatisation (80) ou de refroidissement frigorifique (10) ou de chauffage de l'intérieur d'une enceinte (12) fermée, le dispositif (10, 80) comportant au moins une source d'air comprimé (16, 30) qui alimente au moins un tube de Hilsch-Ranque (24) dit tube "vortex" en air comprimé à une pression d'injection ($P_{inj}$), le tube vortex de Hilsch-Ranque (24) comportant :

   - au moins un orifice tangentiel (40) d'injection d'air comprimé à l'intérieur du tube vortex de Hilsch-Ranque (24) qui est agencé à proximité d'une première extrémité (36) du tube vortex de Hilsch-Ranque, l'air injecté formant un premier courant d'air tourbillonnaire incident (44) en direction d'une deuxième extrémité 538) du tube vortex de Hilsch-Ranque ;
   - une soupape conique (48) qui obture partiellement un premier orifice d'expulsion (46) de la deuxième extrémité (38) du tube vortex de Hilsch-Ranque de manière qu'une première fraction (FC) du courant d'air chaud incident (44) soit expulsée à l'extérieur de l'enceinte (12) tandis qu'une deuxième fraction (FF) du courant d'air est réfléchie en direction de la première extrémité (36) du tube vortex de Hilsch-Ranque en formant un deuxième courant d'air tourbillonnaire (52) concentrique intérieurement au premier courant tourbillonnaire (44), le courant d'air réfléchi (52) étant refroidi par échange de chaleur avec le courant d'air incident (44) ;
   - un orifice de sortie (56), dite froide, de l'air réfléchi (52) qui est agencé à la première extrémité (36) du tube vortex de Hilsch-Ranque de manière à laisser sortir la deuxième fraction (FF) du courant d'air froid (52) à l'intérieur de l'enceinte (12) ;

   **caractérisé en ce que** la soupape conique (48) est préréglée de manière que les première (FC) et deuxième (FF) fractions d'air soient constantes durant le déroulement du procédé et **en ce qu'**il comporte une étape (E3, C4) de commande de la pression d'injection de l'air comprimé ($P_{inj}$).

2. Procédé de commande selon la revendication précédente, **caractérisé en ce que** la température de sortie ($\theta_{SF}$) du courant d'air froid est commandée en agissant uniquement sur la pression d'injection ($P_{inj}$) de l'air dans le tube vortex de Hilsch-Ranque (24) selon une loi de commande prédéterminée (EQ7).

3. Procédé de commande selon la revendication précédente, **caractérisé en ce qu'**il comporte une étape (C2) de calcul de la température de sortie ($\theta_{SF}$) du courant d'air froid préalable à l'étape de commande de la pression d'injection (C4) au cours de laquelle ladite température de sortie ($\theta_{SF}$) est calculée en retranchant une valeur constante prédéterminée à la température d'injection de l'air comprimé ($\theta_{inj}$),
   et **en ce qu'**il comporte une étape de correction (C3) de la température de sortie ($\theta_{SF}$) du courant d'air froid calculée, qui est déclenchée lorsque ladite température de sortie ($\theta_{SF}$) durant l'étape préalable de calcul (C2) est inférieure à une température minimale ($\theta_{min}$) et au cours de laquelle la température de sortie ($\theta_{SF}$) est corrigée de manière à être supérieure ou égale à ladite température minimale ($\theta_{min}$).

4. Procédé de commande selon la revendication précédente, **caractérisé en ce que** la source d'air comprimé (16) est un compresseur d'air qui est aspire l'air ambiant à l'extérieur de l'enceinte (12), et **en ce que** la température d'injection ($\theta_{inj}$) est proportionnelle à la température extérieure ($\theta_{ext}$) à l'enceinte (12).

5. Procédé de commande selon la revendication précédente, **caractérisé en ce que** l'enceinte (12) est un habitacle de véhicule automobile à bord duquel le dispositif de climatisation (80) est embarqué et **en ce que** le compresseur d'air (16) est entraîné par le moteur thermique du véhicule automobile par l'intermédiaire d'une pompe hydraulique et d'un moteur hydraulique.

6. Procédé de commande selon la revendication 2, **caractérisé en ce que** la pression d'injection ($P_{inj}$) est commandée par impulsions à une pression d'injection ($P_{inj}$) qui est prédéterminée, la durée (t) de chaque impulsion étant déterminée de manière que l'enceinte (12) soit maintenue à une température de consigne ($\theta_c$).

7. Procédé selon la revendication précédente, **caractérisé en ce que** la durée (t) de chaque impulsion est déterminée en fonction de la température ambiante à l'intérieur de l'enceinte ($\theta_{int}$), de la température d'injection d'air comprimé dans le tube vortex de Hilsch-Ranque ($\theta_{inj}$), et de la température de consigne ($\theta_c$).

8. Procédé de commande selon la revendication précédente, **caractérisé en ce que** la durée (t) de chaque impulsion est déterminée en prenant en compte l'équilibre (EQ1) entre :

- la somme des déperditions de chaleur ($Q_{dep}$) à travers les parois de l'enceinte (12) par unité de temps et la quantité de chaleur à enlever ($Q_{ref}$)pour refroidir l'air à l'intérieur de l'enceinte (12) jusqu'à la température de consigne ($\theta_c$), et

- la quantité de chaleur ($Q_{m,af}$) susceptible d'être absorbée par l'air froid sortant de chaque tube vortex de Hilsch-Ranque (24) pour ladite unité de temps.

9.  Procédé selon l'une quelconque des revendications 7 ou 8, **caractérisé en ce que** l'air est asséché par des moyens de dessiccation (60A, 60B) avant son injection dans chaque tube vortex de Hilsch-Ranque (24) de manière que son point de rosée soit inférieur à la température de sortie ($\theta_{SF}$) de l'air.

10. Dispositif (10, 80) pour la mise en oeuvre du procédé selon l'une quelconque des revendications précédente, **caractérisé en ce qu'**il comporte une pluralité de tubes vortex de Hilsch-Ranque (24) qui sont alimentés en parallèle par au moins une source commune d'air comprimé (16, 30) et **en ce que** chaque tube vortex de Hilsch-Ranque (24) comporte une soupape conique (48) réglable uniquement manuellement.

Fig. 1

EP 2 107 321 A1

# Fig. 2

# Fig. 4

**Fig. 3**

Fig. 5

**RAPPORT DE RECHERCHE EUROPEENNE**

Numéro de la demande

EP 09 15 6167

Europäisches Patentamt
European Patent Office
Office européen des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CA 1 014 077 A1 (VORTEC CORP VORTEC CORP) 19 juillet 1977 (1977-07-19) | 1 | INV. F25B9/04 |
| Y | * page 6, ligne 6 - page 12, ligne 3; figure 1 * -& US 3 208 229 A (FULTON CHARLES D) 28 septembre 1965 (1965-09-28) * colonne 2, ligne 39 - colonne 3, ligne 24; figures 2,9,10 * * colonne 13, ligne 33-59 * | 2-9 | |
| Y | US 5 682 749 A (BRISTOW DUNCAN J [CA] ET AL) 4 novembre 1997 (1997-11-04) * colonne 1, ligne 55 - colonne 2, ligne 6; figures 1,2 * * colonne 3, ligne 32 - colonne 4, ligne 35; figures 1,2 * | 2-9 | |
| X | US 4 302 949 A (TRIMBOLI LONGHETTO ANTONIO A) 1 décembre 1981 (1981-12-01) | 1,10 | |
| Y | * colonne 5, ligne 1 - colonne 8, ligne 17; figures 4,5,7-13 * | 5 | DOMAINES TECHNIQUES RECHERCHES (IPC) |
| X | HANSSKE, MÜLLER, STREBLOW, ZIEGLER: "Experiments and simulation of a Vortex tube" INTERNATIONAL CONGRESS OF REFRIGERATION 2007, vol. B1, no. 1518, 25 août 2007 (2007-08-25), XP002504643 Beijing, China * page 2, dernier alinéa - page 3, alinéa 1; figure 2 * | 1 | F25B |

-/--

Le présent rapport a été établi pour toutes les revendications

| Lieu de la recherche | Date d'achèvement de la recherche | Examinateur |
|---|---|---|
| La Haye | 17 juillet 2009 | Léandre, Arnaud |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

| | Europäisches Patentamt |
|---|---|
| | European Patent Office |
| | Office européen des brevets |

**RAPPORT DE RECHERCHE EUROPEENNE**

Numéro de la demande

EP 09 15 6167

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | NASH J M ED - INSTITUTE OF ELECTRICAL AND ELECTRONICS ENGINEERS: "VORTEX EXPANSION DEVICES FOR HIGH TEMPERATURE CRYOGENICS" AEROSPACE POWER SYSTEMS. BOSTON, AUG. 4 - 9, 1991; [PROCEEDINGS OF THE INTERSOCIETY ENERGY CONVERSION ENGINEERING CONFERENCE], NEW YORK, IEEE, US, vol. 4, 4 août 1991 (1991-08-04), pages 521-525, XP000312852 ISBN: 978-0-89448-163-5 * page 522, colonne 2, alinéa 1-3; figures 2-5 * ----- | 1 | |
| X | GAO C M ET AL: "Experimental study on a simple Ranque-Hilsch vortex tube" CRYOGENICS, ELSEVIER, KIDLINGTON, GB, vol. 45, no. 3, 1 mars 2005 (2005-03-01), pages 173-183, XP004697287 ISSN: 0011-2275 * figure 3 * ----- | 1 | |
| A | US 3 165 149 A (RAIBLE CLARENCE J ET AL) 12 janvier 1965 (1965-01-12) * le document en entier * ----- | 1,2,6,7,9 | DOMAINES TECHNIQUES RECHERCHES (IPC) |
| A | DE 91 12 504 U1 (HKK HANSEATISCHES KREATIV KONTOR GESELLSCHAFT FUER ENTWICKLUNG UND VER) 23 janvier 1992 (1992-01-23) * page 4, dernier alinéa; figures 1-3 * ----- | 2 | |
| A | GB 945 252 A (KEN ITI MUNAKATA) 23 décembre 1963 (1963-12-23) * page 2, ligne 83-130; figures 1-6 * ----- | 5 | |
| A | US 4 646 524 A (KAWASHIMA JUNZO [JP] ET AL) 3 mars 1987 (1987-03-03) * le document en entier * ----- -/-- | 10 | |

| Le présent rapport a été établi pour toutes les revendications | | |
|---|---|---|
| Lieu de la recherche | Date d'achèvement de la recherche | Examinateur |
| La Haye | 17 juillet 2009 | Léandre, Arnaud |

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 09 15 6167

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2 907 174 A (PIETER HENDAL WILLEM) 6 octobre 1959 (1959-10-06) * colonne 4, ligne 40 - colonne 6, ligne 50; figure 1 * ----- | | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 17 juillet 2009 | Léandre, Arnaud |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 09 15 6167

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-07-2009

| Document brevet cité au rapport de recherche | | | Date de publication | Membre(s) de la famille de brevet(s) | | | Date de publication |
|---|---|---|---|---|---|---|---|
| CA 1014077 | A1 | | 19-07-1977 | US | 3815375 | A | 11-06-1974 |
| US 3208229 | A | | 28-09-1965 | AUCUN | | | |
| US 5682749 | A | | 04-11-1997 | AUCUN | | | |
| US 4302949 | A | | 01-12-1981 | AUCUN | | | |
| US 3165149 | A | | 12-01-1965 | AUCUN | | | |
| DE 9112504 | U1 | | 23-01-1992 | AUCUN | | | |
| GB 945252 | A | | 23-12-1963 | FR | 1245371 | A | 04-11-1960 |
| US 4646524 | A | | 03-03-1987 | AU | 4155585 | A | 01-11-1985 |
| | | | | EP | 0180645 | A1 | 14-05-1986 |
| | | | | WO | 8504465 | A1 | 10-10-1985 |
| US 2907174 | A | | 06-10-1959 | AUCUN | | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- US 1952281 A